# EUROPÄISCHE PATENTSCHRIFT

(11) **EP 1 636 139 B1**
(45) Veröffentlichungstag und Bekanntmachung des Hinweises auf die Patenterteilung: **15.07.2009**
(21) Anmeldenummer: 04739333.5
(22) Anmeldetag: 25.05.2004
(51) Int. Cl.: C02F 1/48

(54) **WASSERBEHANDLUNGSVORRICHTUNG**
WATER TREATMENT DEVICE
DISPOSITIF POUR TRAITER L'EAU

(30) Priorität: 10.06.2003 DE 10326490
(43) Veröffentlichungstag der Anmeldung: 22.03.2006
(73) Patentinhaber: Flettner, Marc, 40629 Düsseldorf (DE)
(72) Erfinder: Flettner, Marc, 40629 Düsseldorf (DE)
(74) Vertreter: Borkowski, Jens
(86) Internationale Anmeldenummer: PCT/EP2004/005604
(87) Internationale Veröffentlichungsnummer: WO 2004/108607

(56) Entgegenhaltungen:
- EP-A- 1 046 616
- GB-A- 191 409 396
- US-A- 4 789 448
- US-A- 5 368 705
- US-B1- 6 267 883

## Beschreibung

Die Erfindung betrifft eine Wasserbehandlungsvorrichtung umfassend eine metallische Hülse, in der wenigstens eine metallische Opferanode angeordnet ist, die mit der Hülse elektrisch leitend verbunden ist.

Derartige Wasserbehandlungsvorrichtungen zum Einsatz in Wasserleitungsnetzen sind im Stand der Technik bekannt, beispielsweise durch die US 3,974,071. Dieses Dokument offenbart eine Wasserbehandlungsvorrichtung mit einer metallischen Hülse, in die eine spiralförmig entlang des Strömungsweges gewundene Opferanode eingesetzt ist, wobei durch die Spiralform ein inniger Kontakt zwischen dem Wasser und der Oberfläche der Anode sicher gestellt werden soll. Weitere bekannte Vorrichtungen zur Wasserbehandlung mittels metallischer Opferanoden sind z.B. die US 5 695 644 und die EP 1 046 616.

Die Wirkung derartiger Wasserbehandlungsvorrichtungen beruht auf einem elektrogalvanischen Prinzip, bei dem durch eine leitende Verbindung zwischen zwei unähnlichen Metallen aufgrund der unterschiedlichen Wertigkeiten dieser Metalle eines der beiden Metalle als eine Opferanode seine Metallionen in das Wasser freigibt. Es hat sich herausgestellt, dass diese Metallionenfreigabe positive Wirkungen dadurch erzeugt, dass beispielsweise eine Korrosionsschutzschicht auf den Rohrinnenseiten eines Wasserleitungsnetzes aufgebaut werden kann, in dem sich eine derartige Wasserbehandlungsvorrichtung befindet.

Ebenso ist beobachtet worden, dass die Metallionenfreisetzung zu einer Agglomeration von Wasserinhaltsstoffen, beispielsweise kesselsteinbildenden Substanzen, führt, wodurch sich gegenüber unbehandeltem Wasser eine erhöhte und vergrößerte Partikelgröße der Wasserinhaltsstoffe ergibt - vermutlich durch Keimbildung an den Metallionen. Insbesondere durch die Vergrößerung der Wasserinhaltsstoffe durch eine Agglomeration wird erreicht, dass sich in dem folgenden Leitungsnetz weniger dieser Inhaltsstoffe absetzen können, so dass in einem Leitungsnetz, welches eine solche Wasserbehandlungsvorrichtung aufweist, der wirksame Innenquerschnitt der Rohre freigehalten werden kann von Ablagerungen. Ohne eine derartige Wasserbehandlungsvorrichtung ist eine Tendenz erkennbar, dass Wasserleitungsrohre im Laufe der Zeit vom äußeren Rand her nach innen hin beispielsweise durch Kalkablagerungen allmählich zuwachsen.

Da die wesentliche Wirkung derartiger Wasserbehandlungsvorrichtungen auf einer ungestörten Freigabe von Metallionen der Opferanode beruht, ist für einen optimalen Betrieb einer Wasserbehandlungsvorrichtung der gattungsgemäßen Art sicher zu stellen, dass eine gleichmäßige Metallionenfreigabe im Laufe der Betriebszeit gewährleistet bleibt. Bei üblichen im Stand der Technik bekannten Wasserbehandlungsvorrichtungen ist festzustellen, dass die Opferanoden im Laufe der Zeit durch Verschmutzungen ihre optimale Wirksamkeit verlieren, so dass im Laufe der Zeit immer weniger Metallionen in das Wasser abgegeben werden und die positiven Wirkungen bekannter Wasserbehandlungsvorrichtungen nachlassen.

Aufgabe der Erfindung ist es eine Wasserbehandlungsvorrichtung der gattungsgemäßen Art dahingehend weiterzubilden, dass eine optimale Aktivität der Metallionenfreigabe aus einer Opferanode über lange Zeit erhalten bleibt.

Diese Aufgabe wird erfindungsgemäß durch eine Vorrichtung gemäß Anspruch 1 gelöst.

Gerade bei geringen Wasserströmungsgeschwindigkeiten kann es in Wasserleitungsnetzen innerhalb der Rohre zu laminaren Wasserströmungen kommen, wobei die Strömungsgeschwindigkeiten im Bereich der Rohrwandung sehr gering sind. In diesem Bereich angeordnete Opferanoden oder aber auch Opferanoden, die selbst kanal- bzw. rohrförmig ausgebildet sind, werden an ihrer Oberfläche nur von einer langsamen Wasserströmung berührt, so dass sich an dieser Oberfläche Verunreinigungen ablagern können, die zu einer Reduktion der Ionenabgabe und so der positiven Wirkungen einer Wasserbehandlungsvorrichtung führen können.

Durch den erfindungsgemäßen Einsatz von metallischen Wirbelkörpern, die in Strömungsrichtung vor einer Opferanode angeordnet sind, wird eine Wasserverwirbelung vor oder in oder um eine Opferanode erreicht, so dass gerade durch die verwirbelte Wasserströmung eine Reinigungswirkung bei einer Opferanode realisiert werden kann, um die Ablagerung von Verschmutzungen zu verhindern und so die Wirksamkeit der Opferanode lange Zeit aufrecht zu erhalten. Die erfindungsgemäß hervorgerufene Verwirbelung des strömenden Wassers bewirkt weiterhin auch eine erhöhte Freisetzung von Metallionen der Opferanode, so dass hierdurch die positive Wirkung einer derartigen Wasserbehandlungsvorrichtung weiterhin noch gesteigert wird. Die Wirbelkörper bewirken auf sichere Art, dass eine eventuelle laminare Strömung turbulent wird oder eine turbulente Strömung eine noch weitere Störung erfährt.

Der Einsatz wenigstens eines Wirbelkörpers aus Metall hat weiterhin den Vorteil, dass gegenüber anderen Materialien ein solcher Wirbelkörper eine besonders hohe Standzeit hat, so dass eine erfindungsgemäße Wasserbehandlungsvorrichtung sich lediglich durch den allmählichen Verbrauch der einen oder mehreren Opferanoden erschöpft.

Um die elektrogalvanische Wirkung zu erzeugen, können für die Hülse und die wenigstens eine darin angeordnete Opferanode unähnliche Metalle verwendet werden. Beispielsweise kann für die Hülse Rotguss eingesetzt werden, wohingegen für die Opferanode beispielsweise Zink eingesetzt werden kann.

Ebenso ist es dem Fachmann möglich geläufige andere Metallkombinationen zu wählen.

Bevorzugt wird für die metallischen Wirbelkörper Edelstahl ausgewählt, da dieses Material eine besonders lange Lebensdauer aufgrund seiner Härte und Korrosionsbeständigkeit aufweist. Eine weitere zusätzlich Edelmetallbeschichtung kann vorgesehen sein. Darüber hinaus ist eine eventuell bestehende elektrogalvanische Wirkung zwischen einem Wirbelkörper aus Edelstahl und den anderen Metallen der Wasserbehandlungsvorrichtung sehr gering, so dass eine Neigung des metallischen Wirbelkörpers, selbst als Opferanode zu wirken, sehr gering ist.

Um Störungen der elektrogalvanischen Wirkung zwischen einer Opferanode und der metallischen Hülse zu vermeiden und darüber hinaus eine Opferneigung der metallischen Wirbelkörper selbst zu verhindern, kann es bevorzugt vorgesehen sein, dass ein Wirbelkörper gegen einen direkten elektrischen Kontakt mit einer Opferanode isoliert ist.

Hierfür kann es beispielsweise vorgesehen sein, dass bei einer benachbarten Anordnung von metallischem Wirbelkörper und Opferanode zwischen diesen ein isolierendes Element angeordnet ist. Ebenso kann es bevorzugt vorgesehen sein, dass zwischen einem Wirbelkörper und einer Opferanode ein Abstand vorgesehen ist, insbesondere mittels eines Abstandshalters zwischen diesen Elementen. So kann zum einen bereits durch die Beabstandung eine Isolierung zwischen Wirbelkörper und Opferanode erreicht werden, wobei entweder der Abstandshalter selbst aus einem isolierenden Material ausgebildet ist oder, sofern der Abstandshalter metallisch ausgebildet wird, dieser gegenüber dem Wirbelkörper und/oder der Opferanode isolierend beispielsweise durch Zwischenfügung eines isolierenden Elementes angeordnet wird.

Weiterhin kann durch die Beabstandung sicher gestellt werden, dass sich nach dem Wirbelkörper besonders starke Verwirbelungen des Wassers ausbilden und so erhöht zur Reinigungsaktivität und zur vermehrten lonenfreisetzung der Opferanode beitragen.

In Ergänzung zur vorbeschriebenen Ausführung einer Isolierung zwischen dem metallischen Wirbelkörper und einer Opferanode kann es besonders bevorzugt vorgesehen sein, einen metallischen Wirbelkörper vollständig isoliert sowohl von einer Opferanode als auch von der metallischen Hülse innerhalb dieser anzuordnen. Dies kann durch entsprechende Isolierungselemente erfolgen, in oder zwischen die ein Wirbelkörper eingebettet ist.

In einer weiterhin bevorzugten Ausführung kann es vorgesehen sein, dass ein Wirbelkörper vor und hinter wenigstens einer Opferanode angeordnet ist. Dies hat den konstruktiven Vorteil, dass beim Einbau einer erfindungsgemäßen Wasserbehandlungsvorrichtung in ein Wasserleitungsnetz keinerlei Einbaurichtung beachtet werden muss, da unabhängig von einer Einbaurichtung grundsätzlich in Strömungsrichtung vor einer Opferanode ein Wirbelkörper angeordnet ist. Die Anordnung eines Wirbelkörpers in Strömungsrichtung hinter einer Opferanode hat darüber hinaus weiterhin den erfindungsgemäßen Vorteil, dass die freigesetzten Metallionen der Opferanode besonders gut verteilt werden. Bei der Anordnung von Wirbelkörpern vor und hinter wenigstens einer Opferanode kann es ergänzend auch vorgesehen sein, dass Wirbelkörper in ihrer Orientierung zur Strömungsrichtung um 90 Grad verdreht sind.

Da Wirbelkörper zwangsläufig dem strömenden Wasser in Strömungsrichtung einen Widerstand entgegenbringen, kann es weiterhin vorgesehen sein, dass ein Wirbelkörper mittels eines Sicherungselementes in seiner Position innerhalb der metallischen Hülse örtlich fixiert ist.

Zur Erzielung einer guten Verwirbelung des Wassers mittels eines erfindungsgemäßen metallischen Wirbelkörpers ist vorgesehen dass der Wirbelkörper eine Vielzahl von zueinander unterschiedlich orientierten Lochblechen umfasst. Um ein Verschieben einzelner Lochbleche zueinander zu verhindern und damit auch eine Geräuschentwicklung innerhalb der metallischen Hülse zu vermeiden, kann es vorgesehen sein, dass die einzelnen Lochbleche, die ein Wirbelkörper umfasst, jeweils aneinander befestigt sind. Dies kann durch jede dem Fachmann geläufige Maßnahme erfolgen, wie beispielsweise Verschweißen, Verlöten, Verkleben oder auch durch eine Steckverbindung. Ebenso kann es vorgesehen sein einen derartigen Wirbelkörper einstückig beispielsweise durch Metallgussverfahren herzustellen.

Bei einer Befestigung untereinander durch eine Steckverbindung kann es auch vorgesehen sein, dass einzelne Lochbleche Steckerelemente aufweisen, die in entsprechende Buchsenelemente anderer Lochbleche eingreifen, wobei beispielsweise die Buchsenelemente durch die Löcher selbst eines derartigen Lochbleches realisiert sein können. Weiterhin können sich die Steckelemente durch die verbliebenen Stege zwischen den Löchern an einer Stirnseite eines Lochbleches ergeben.

In weiterer Ausbildung oder auch alternativ zu vorhergenannten Konstruktionen kann es auch vorgesehen sein, dass ein Wirbelkörper ein insbesondere gelochtes, bevorzugt in Strömungsrichtung schraubenförmig gewundenes Blech oder ähnliches Element umfasst. Hierdurch kann ein sich schraubenförmig drehender Wasserfluss vor, durch und um eine Opferanode eingestellt werden, mit dem entsprechend gewünschten Reinigungseffekt und erhöhter lonenfreisetzung.

Es kann ebenso vorgesehen sein, dass ein Wirbelkörper durch zwei senkrecht zur Strömungsrichtung in einem Abstand zueinander angeordnete insbesondere gelochte Bleche ausgebildet ist, zwischen denen sich wenigstens ein weiteres, insbesondere gelochtes Blech erstreckt. Die senkrecht ausgebildeten bevorzugt gelochten Bleche können hierbei einen Querschnitt aufweisen, der dem Innenquerschnitt der metallischen Hülse an dieser Stelle im Wesentlichen entspricht.

Üblicherweise wird der Querschnitt der metallischen Hülse und der der Lochbleche kreisförmig sein. Die zwei hintereinander angeordneten Lochbleche, zwischen denen sich bevorzugt, aber nicht notwendigerweise ein weiteres, insbesondere gelochtes Blech erstreckt, können derart angeordnet sein, dass die jeweils in den Blechen angeordneten Löcher in Strömungsrichtung betrachtet zueinander versetzt angeordnet sind, so dass es in Strömungsrichtung für das fließende Wasser keinen ungestörten Weg durch die Löcher der hintereinander angeordneten Lochbleche gibt.

Eine weitere wirbelverursachende Störung kann dadurch erreicht werden, dass wenigstens ein weiteres, insbesondere gelochtes Blech zwischen den senkrechten Lochblechen angeordnet ist. Ein derartiges, einzelnes zwischen den Blechen angeordnetes weiteres Lochblech kann beispielsweise in seiner Ebene in axialer Richtung der Hülse ausgerichtet sein. Bei zwei zwischen den senkrechten Blechen angeordneten weiteren Lochblechen kann es vorgesehen sein, dass diese beiden Lochbleche je nach Betrachtungsrichtung aufeinander zulaufend bzw. voneinander weglaufend, insofern bildlich gesprochen im Wesentlichen V-förmig zueinander angeordnet sind. Es können auch höhere Anzahlen von weiteren bevorzugt gelochten Blechen zwischen den senkrechten Blechen angeordnet sein.

Bei der Konstruktion eines Wirbelkörpers kann es vorgesehen sein, dass dieser wenigstens ein Lochblech umfasst, welches eine Vielzahl von Löchern mit unterschiedlichen Querschnittsformen und/oder Querschnittsgrößen aufweist. So können in einem Lochblech kreisrunde Löcher verschiedener Durchmesser, aber auch Löcher verschiedener Querschnittsformen, somit auch mit eckigen Querschnitten oder kreissegmentförmigen Querschnitten innerhalb eines Lochbleches ausgebildet sein.

Wesentlich für einen Wirbelkörper ist es, dass dieser eine ungestörte Wasserströmung verhindert und so zu Verwirbelungen führt. Hierfür ist die konkrete Ausführung eines Wirbelkörpers prinzipiell irrelevant und nicht auf die vorgenannten und nachfolgend beschriebenen Ausführungen beschränkt.

Verschiedene Ausführungsformen einer erfindungsgemäßen Wasserbehandlungsvorrichtung sind in den nachfolgenden Abbildungen näher erläutert. Es zeigen:
- Figur 1: eine Wasserbehandlungsvorrichtung mit einem einzelnen, senkrecht zur Strömungsrichtung in einem Abstand zur Opferanode angeordneten Lochblech (nicht erfindungsgemäß)
- Figur 2: eine Wasserbehandlungsvorrichtung mit einem Strömungskanäle aufweisenden Wirbelkörper (nicht erfindungsgemäß)
- Figur 3: eine Wasserbehandlungsvorrichtung mit einem Wirbelkörper aus zwei senkrecht zur Strömungsrichtung angeordneten Lochblechen mit einem weiteren, dazwischen angeordneten Lochblech
- Figur 4: einen Wirbelkörper mit zwei weiteren V-förmig angeordneten Lochblechen zwischen zwei senkrecht zur Strömungsrichtung angeordneten Lochblechen
- Figur 5: eine ähnliche Anordnung wie Figur 4, wobei die zwischen den senkrecht stehenden Lochblechen angeordneten zwei weiteren Lochbleche zueinander einen vergrößerten Abstand aufweisen
- Figur 6: eine Wasserbehandlungsvorrichtung mit zwei Opferanoden und einem schraubenförmig gewundenen Wirbelkörper
- Figur 7: typische Ausführungen von Opferanoden
- Figur 8: einen Wirbelkörper gemäß der Ausführung nach Figur 3
- Figur 9: einen Wirbelkörper gemäß der Ausführung nach Figur 4

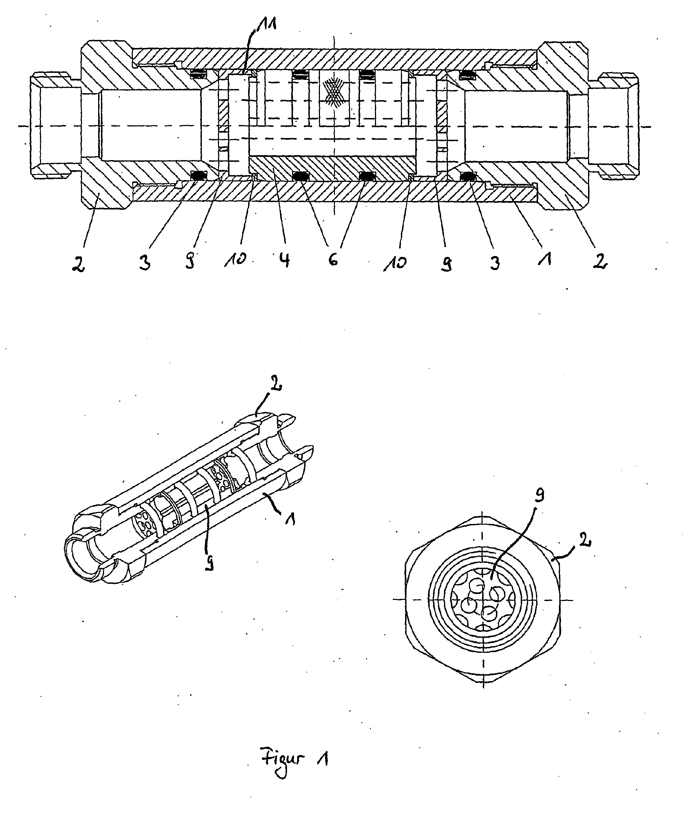

Die Figur 1 zeigt in einer perspektivischen und einer Schnittansicht die Ausführung einer Wasserbehandlungsvorrichtung mit einer metallischen Hülse 1, die beispielsweise aus Rotguss ausgefertigt ist. Die metallische Hülse 1 weist an ihren jeweiligen Endbereichen Anschlusselemente 2 auf zum Anschluss an ein beispielsweise bestehendes Wasserleitungsnetz, wobei diese Anschlusselemente im hier dargestellten Fall Ansätze mit einem Außengewinde zur Verschraubung im Wasserleitungsnetz aufweisen. Die Anschlusselemente 2 sind mit der metallischen Hülse 1 über jeweils einen Dichtring 3 wasserdicht verbunden.

Eine derartige Wasserbehandlungsvorrichtung kann neben den dargestellten Anschlusselementen 2 beliebige andere Anschlusselemente, beispielsweise mit Innengewinde oder mit Flanschen oder ähnliche Verbindungsmöglichkeiten aufweisen. Ebenso kann es möglich sein, dass die Anschlusselemente einstückig mit der Hülse verbunden sind bzw. die Hülse selbst entsprechende Gewinde oder Flansche aufweist. Die dargestellte Wasserbehandlungsvorrichtung kann beliebige Nennweiten aufweisen, beispielsweise bevorzugt von DN08 bis DN250, so dass ein Einsatz in beliebigen Wasserleitungsnetzen stattfinden kann.

Neben dem Einsatz in Wasserleitungsnetzen kann es auch vorgesehen sein, die Behandlungsvorrichtung für andere Fluide einzusetzen, in denen eine ähnliche oder gleiche Wirkung wie zuvor beschrieben im Wasser erreicht werden soll.

Innerhalb der Wasserbehandlungsvorrichtung gemäß Figur 1 ist im vorliegenden Fall eine metallische Opferanode 4 etwa mittig in der Hülse 1 angeordnet, wobei diese Opferanode beispielsweise aus dem Metall Zink ausgeführt ist und bevorzugt einen innigen elektrischen Kontakt zur Hülse 1 aufweist.

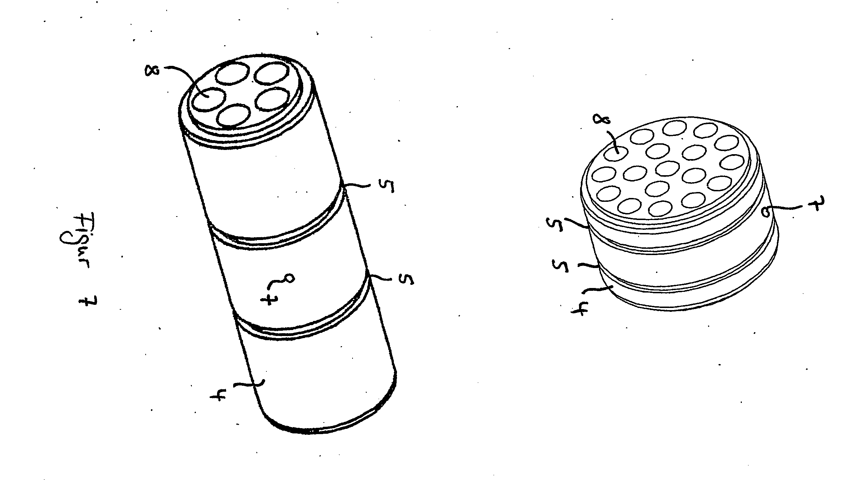

Eine Ausführung dieser Opferanode ist besonders deutlich in der Figur 7 dargestellt, wobei hier erkennbar ist, dass die Opferanode 4 eine im Wesentlichen zylindrische Form aus einem Zink-Vollmaterial aufweist, wobei der Außendurchmesser einer Opferanode derart an den Innendurchmesser der metallischen Hülse 1 angepasst ist, dass ein inniger elektrischer Kontakt zwischen diesen besteht.

Um ein Zwischenkriechen von Wasser zwischen die Opferanode und die metallische Hülse 1 zu vermeiden und somit einen trockenen Kontakt zwischen Opferanode 4 und Hülse 1 sicherzustellen, kann es wie hier dargestellt bevorzugt vorgesehen sein, dass der zylindrische Opferanodenkörper auf seiner Mantelfläche zwei beabstandete umlaufende Nuten 5 aufweist, in die jeweils ein Dichtungsring 6 einlegbar ist. Hierdurch wird gewährleistet, dass wenigstens der zwischen den beiden Nuten 5 befindliche Bereich 7 einer Opferanode eine trockene Kontaktfläche zur metallischen Hülse 1 bildet.

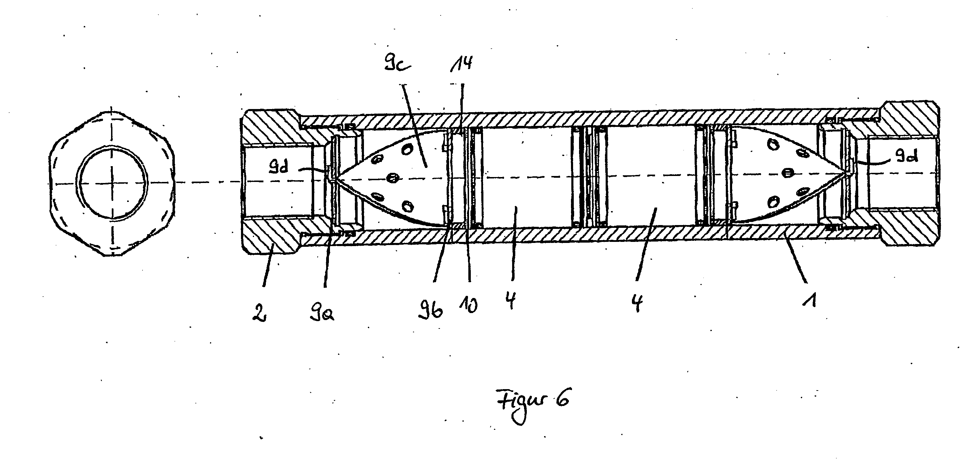

In der Figur 1 und auch in der Figur 6 ist es erkennbar, dass der zylindrische Opferanodenkörper 4 aus einem Zink-Vollmaterial von mehreren kanalbildenden Bohrungen 8 durchzogen ist, um innerhalb der metallischen Hülse 1 eine Wasserströmung durch die Opferanode 4 zu gewährleisten. Hierbei können, wie in der Figur 6 an den beiden exemplarischen Opferanoden 4 dargestellt, unterschiedliche Anzahlen von Kanälen und auch mit unterschiedlichen Durchmessern innerhalb der Opferanode 4 realisiert werden. Die wirksame Oberfläche der Opferanaode wird gebildet durch die Stirnseiten senkrecht zur Wasserströmungsrichtung und insbesondere durch die Innenwandungen der Kanäle 8 in der Opferanode 4.

Grundsätzlich ist die Formgebung der Opferanode 4 hinsichtlich der erfindungsgemäßen Wirkungen völlig irrelevant.

Die Figur 1 zeigt weiterhin, dass in Strömungsrichtung vor und auch in Strömungsrichtung nach der Opferanode 4 jeweils ein Wirbelkörper 9 innerhalb der metallischen Hülse 1 angeordnet ist, um eine Verwirbelung des strömenden Wassers insbesondere vor, in und nach einer Opferanode zu gewährleisten, um eine Reinigung und insbesondere auch eine erhöhte lonenfreisetzung zu erzielen.

Um einen direkten elektrischen Kontakt zwischen einem Wirbelkörper 9 und der Opferanode 4 zu vermeiden, ist zwischen diesen ein isolierendes Element 10 angeordnet, welches im vorliegenden Fall in Form eines Ringes ausgebildet ist, der um eine vorspringende Stirnfläche der Opferanode herumgelegt ist.

Um einen Abstand des Wirbelkörpers 9 zur Opferanode zu erreichen, ist dieser mit einem Abstandshalter 11 versehen, der im vorliegenden Fall in Form eines vorspringenden Kragens direkt an dem Wirbelkörper 9 einstückig angeformt ist oder alternativ auch als vorgelagerter Ring ausgeführt wird.

Insbesondere in Aufsicht auf die Stirnseite der erfindungsgemäßen Wasserbehandlungsvorrichtung ist es ersichtlich, dass in dem Wirbelkörper Bohrungen unterschiedlichen Durchmessers angeordnet sind. Hierbei kann es insbesondere vorgesehen sein, dass die einzelnen Bohrungen bzw. allgemein die Löcher eines Wirbeleinsatzes gegenüber den in einer Opferanode 4 angeordneten durchgängigen Kanälen 8 zumindest teilweise versetzt angeordnet sind, um zu verhindern, dass strömendes Wasser in axialer Richtung der Hülse einen ungestörten Weg findet.

In der Ausführung gemäß der Figur 1 ist der Wirbelkörper 9 örtlich fixiert, was vorliegend dadurch erreicht wird, dass er zwischen der Opferanode 4 und dem Anschlusselement 2 eingeklemmt wird. Durch die beidseitig zur Opferanode erfolgte Klemmung ist insgesamt ein fester Sitz aller in der Hülse 1 angeordneter Elemente gewährleistet.

Die obengenannten grundsätzlichen Eigenschaften einer Wasserbehandlungsvorrichtung, wie z.B. Maß- und Materialangaben sowie Eigenschaften treffen ebenso auf alle anderen noch folgenden Ausführungen zu.

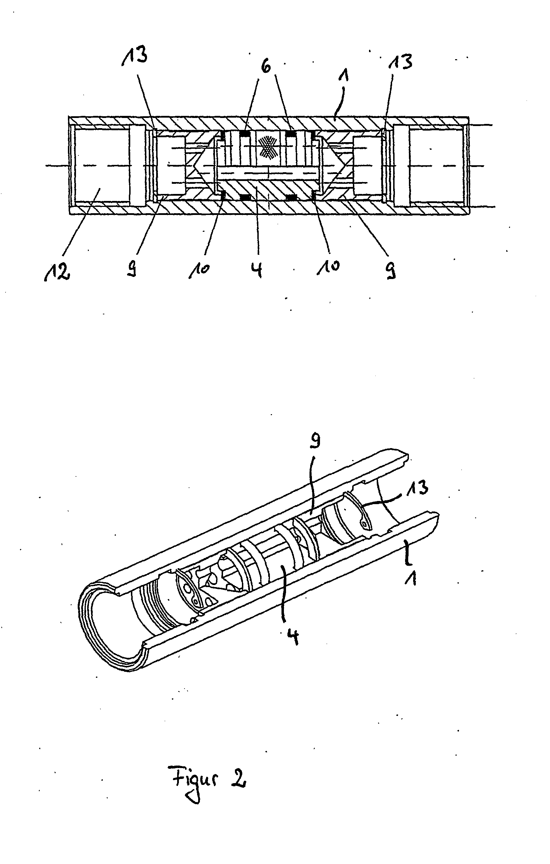

Die Figur 2 zeigt eine andere Wasserbehandlungsvorrichtung mit im Wesentlichen wieder zur Figur 6 baugleichen Operanode 4, wobei hier vorliegend die Anschlussbereiche der metallischen Hülse 1 durch ein in der Hülse angeordnetes Innengewinde 12 realisiert ist.

Wiederum in Strömungsrichtung vor und hinter der Opferanode 4 ist durch einen isolierenden Ring 10 getrennt ein Wirbelkörper 9 angeordnet, der jedoch vorliegend aus einem im Wesentlichen zylindrischen Element ausgebildet ist, welches ebenso wie die Opferanode 4 Durchgangsbohrungen aufweist. Hierbei weist die der Opferanode 4 zugewandte Stirnseite eines Wirbelkörpers 9 eine im Wesentlichen kegelförmige Vertiefung auf, um so letztendlich einen Abstand zwischen der Stirnfläche des Wirbelkörpers 9 und der Opferanode 4 zu bilden.

Vorliegend ist der Wirbelkörper 9 durch einen Sprengring 13 zwischen diesem und der Opferanode innerhalb der metallischen Hülse 1 gesichert.

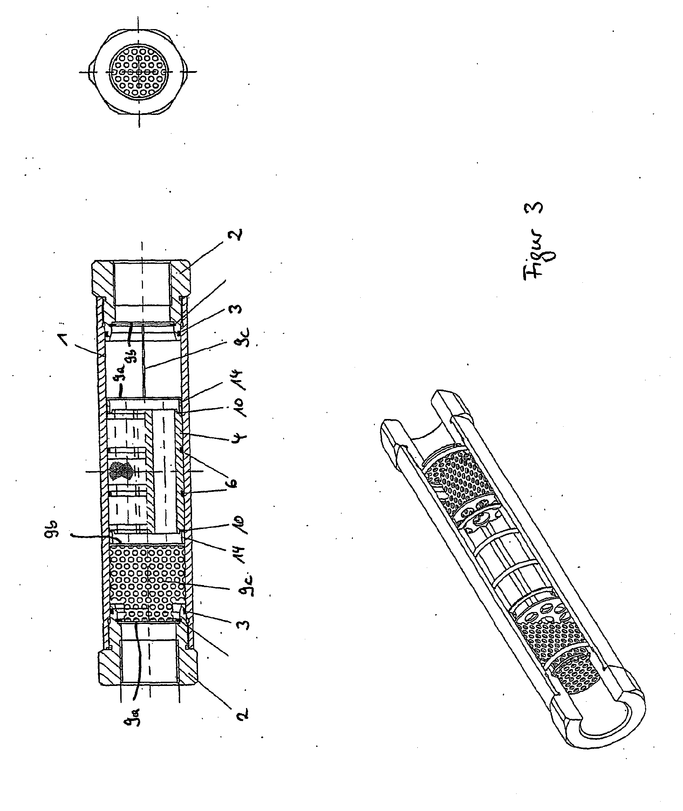

Die Figur 3 zeigt eine erfindungsgemäße Ausführung mit im Wesentlichen der gleichen Opferanode 4, wobei vorliegend der Wirbelkörper 9 durch ein erstes, senkrecht zur Strömungsrichtung angeordnetes Lochblech 9a und ein dazu beabstandetes zweites, ebenso angeordnetes Lochblech 9b gebildet wird, zwischen denen sich ein weiteres Lochblech 9c erstreckt, wobei die Lochblechebene 9c hier bevorzugt auf der Mittenachse der Hülse angeordnet ist.

Der Wirbelkörper 9 ist in dieser Ausführung durch einen Abstandshalter 14 in Form eines beispielsweise metallischen Ringes gegenüber der Opferanode 4 auf Abstand gehalten, wobei zwischen dem Abstandshalter 14 und der Opferanode 4 wiederum ein isolierender Ring 10 wie schon zuvor beschrieben angeordnet ist.

In der Figur 3 ist erkennbar, dass die beiden Wirbelkörper 9, die in Strömungsrichtung vor und hinter der Opferanode 4 angeordnet sind, in ihrer Orientierung um 90 Grad verdreht sind.

Weiterhin ist es insbesondere in der perspektivischen Ansicht in der Figur 3 erkennbar, dass die Anzahl und die Lochdurchmesser an den jeweiligen beiden senkrecht zur Strömungsrichtung angeordneten Lochblechen 9a und 9b unterschiedlich sind.

Die Ausführung des Wirbelkörpers gemäß der Figur 3 ist insbesondere auch in der Figur 7 gut erkennbar. Hier zeigt sich gerade in der Darstellung oben rechts, dass es bei der ausgewählten Lochanordnung mit den unterschiedlichen Anzahlen und Durchmessern jeweils Teilüberschneidungen der Löcher gibt, so dass das Wasser in seiner Strömungsrichtung nur wenige ungestörte Bereiche durchfließen kann, was zu starken Verwirbelungen führt.

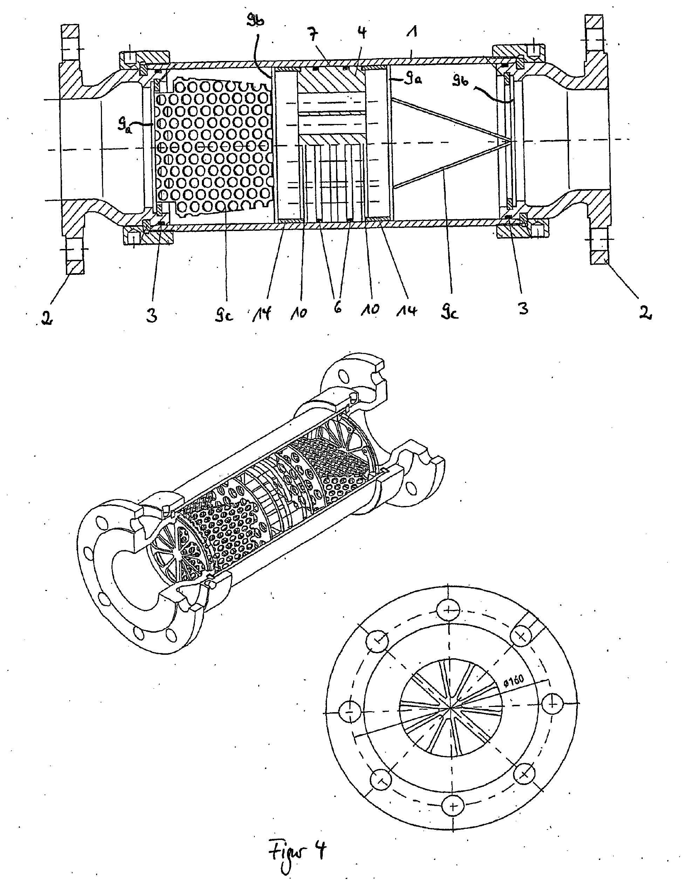

Die Figur 4 zeigt eine weitere Ausführung einer erfindungsgemäßen Wasserbehandlungsvorrichtung im wesentlichen wie Figur 3 mit einer metallischen Hülse 1, der wiederum mittig eine Opferanode 4 mit ihren beiden auf der zylindrischen Oberfläche in Nuten eingesetzten O-Ringen 6 angeordnet ist. Die Opferanode weist wiederum die typische Form gemäß der Figur 7 auf. Im vorliegenden Fall kann eine Verbindung der Wasserbehandlungsvorrichtung zu einem Wasserleitungsnetz über entsprechend ausgebildete Flansche 2 erfolgen. Wie auch schon in der Figur 3 beschrieben, umfasst der Wirbelkörper zwei zur Strömungsrichtung senkrecht angeordnete Lochbleche 9a und 9b, wobei im vorliegenden Fall zwischen diesen Lochblechen zwei weitere Lochbleche 9c angeordnet sind, die zueinander V-förmig verlaufen. Hierbei können zwischen den inneren Lochblechen unterschiedliche Winkel von beispielsweise 30 Grad gewählt werden.

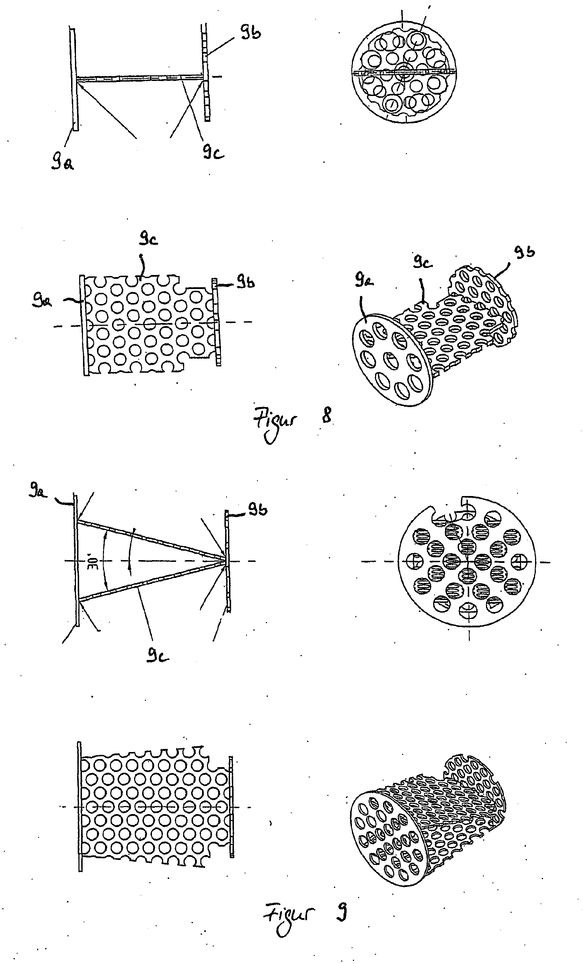

Ein derartiger Wirbelkörper ist beispielsweise in der Figur 9 näher dargestellt und es ist insbesondere in der Aufsicht gemäß der Figur 9 oben rechts ersichtlich, dass das Wasser auf seinem Strömungsweg erhebliche Störungen auch durch die zwischen den senkrechten Lochblechen angeordneten weiteren Lochblechen 9c erfährt. In der Figur 9 ist dargestellt, dass die Löcher in den Lochblechen senkrecht zur Strömungsrichtung kreisrunden Querschnitt haben, wobei in der Figur 4 auch weitere alternative Querschnittsformen, beispielsweise etwa kreissegmentförmige Ausschnitte dargestellt sind. Hier ist zu erwähnen, dass für die Löcher in den Lochblechen grundsätzlich beliebige Formen in Frage kommen.

Auch bei dieser Ausführung ist es ersichtlich, dass die Querschnitte der einzelnen Löcher nicht nur unterschiedliche Formgebung, sondern auch unterschiedliche Größe haben.

Wie zuvor beschrieben, ist ein Wirbelkörper 9 gegenüber der Opferanode 4 durch einen Abstandshalter 14 beabstandet und durch einen Isolierring 10 elektrisch entkoppelt.

Wie bei im Wesentlichen allen Ausführungsformen ist hier erkennbar, dass die Form der senkrecht zur Strömungsrichtung angeordneten Lochbleche im Wesentlichen kreisrund und an den Innendurchmesser der Hülse angepasst ist. Hierbei kann gerade wie in der Figur 4 linksseitig zur Opferanode erkennbar das in Strömungsrichtung erste senkrechte Lochblech 9a auch innerhalb eines Flanschansatzes insbesondere in einem Hinterschnitt gehalten sein.

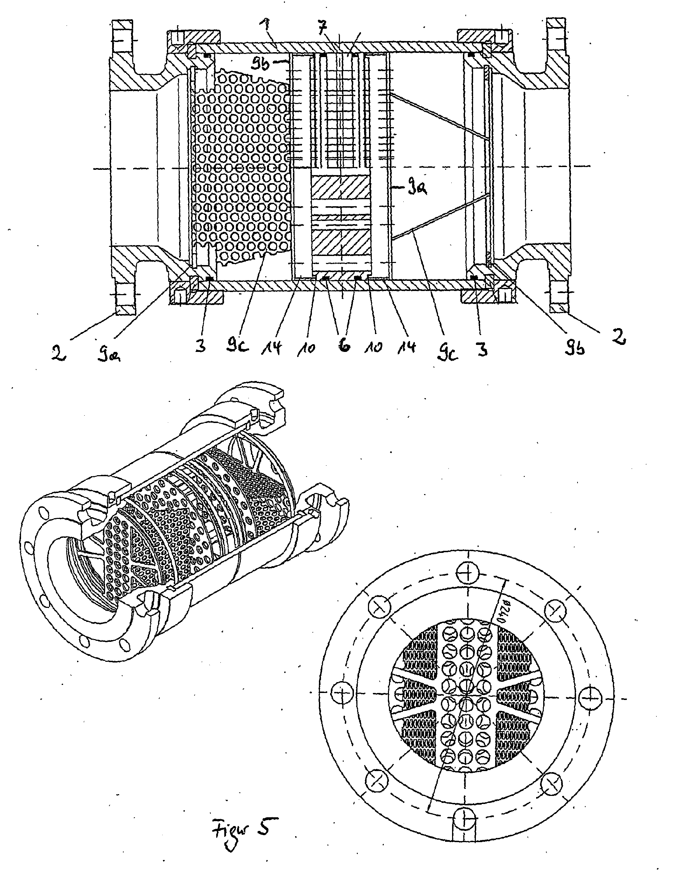

Die Figur 5 zeigt eine nochmals leicht geänderte Ausführung im Wesentlichen wie in der Figur 4, wobei jedoch hier die zwischen zwei senkrecht zur Strömungsrichtung angeordneten Lochblechen 9a und 9b die beiden in Strömungsrichtung aufeinander zulaufenden Lochbleche 9c an ihren beiden nahekommenden Enden einen Abstand zur Mittenachse der Hülse 1 aufweisen. Insbesondere in der perspektivischen Schnittansicht und in der Aufsicht in der Figur 5 wird deutlich, dass hier mit Bezug auf das erste, senkrecht zur Strömungsrichtung angeordnete Lochblech 9a sowohl unterschiedliche Querschnittsformen als auch Querschnittsflächen der Löcher innerhalb eines Bleches realisiert sind. Grundsätzlich können hier beliebige Formgestaltungen gewählt werden, wobei die Löcher derart ausgebildet werden können, dass sich zwischen benachbarten Löchern lediglich dünne stabilisierende Stege ergeben. In einer Entartung kann es auch vorgesehen sein, dass ein Lochblech nur ein einziges oder sehr wenige große Löcher aufweist, so dass ein derartiges Lochblech im Wesentlichen zu einem Ring entartet und als Befestigungsmöglichkeit für die inneren Lochbleche dient.

Die Aufsicht auf die Front der erfindungsgemäßen Wasserbehandlungsvorrichtung in der Figur 5 zeigt hier wiederum deutlich, dass das Wasser auf seinem Stromfluss eine erhebliche wirbelerzeugende Störung erfährt, wodurch sich die positiven Wirkungen einstellen.

Die Figur 6 zeigt eine Wasserbehandlungsvorrichtung mit einer metallischen Hülse in der zwei Opferanoden 4 hintereinander unmittelbar ohne Abstand angeordnet sind. Unabhängig von der Anodenanzahl ist hier die weitere Form der beiden Wirbelkörper durch ein schraubenförmig gewundenes Lochblech 9c realisiert, welches zwischen zwei senkrechten Lochblechen 9a und 9b angeordnet ist. Erkennbar ist hier dass zwischen diesen Lochblechen eine Steckverbindung besteht. Das Lochblech weist an seiner Endseite wenigstens eine vorspringende Lasche 9d auf, die durch eine z.B. schlitzförmige Ausnehmung in einem Senkrechten Lochblech hindurchführbar ist und dann zur Befestigung umgeklappt wird.

Die vorbeschriebenen Figuren zeigen Ausführungen, bei denen die Merkmale hinsichtlich der Ausgestaltung und der Anzahl der Wirbelkörper und Opferanoden beliebig änderbar und/oder kombinierbar ist.

## Patentansprüche

1. Wasserbehandlungsvorrichtung umfassend eine metallische Hülse (1), in der wenigstens eine metallische Opferanode (4) angeordnet ist, die mit der Hülse (1) elektrisch leitend verbunden ist, wobei in der Hülse (1) in Strömungsrichtung vor einer Opferanode (4) wenigstens ein in der Wasserströmung Wirbel verursachender metallischer Wirbelkörper (9, 9a, 9b, 9c, 9d) angeordnet ist, **dadurch gekennzeichnet, dass** ein Wirbelkörper (9, 9a, 9b, 9c, 9d) eine Vielzahl von zueinander unterschiedlich orientierten Lochblechen umfasst.

2. Vorrichtung nach Anspruch 1, **dadurch gekennzeichnet, dass** die Lochbleche eines Wirbelkörpers (9, 9a, 9b, 9c, 9d), insbesondere durch eine Steckverbindung (9d), aneinander befestigt sind.

3. Vorrichtung nach einem der vorherigen Ansprüche, **dadurch gekennzeichnet, dass** ein Wirbelkörper (9, 9a, 9b, 9c, 9d) ein gelochtes, in Strömungsrichtung schraubenförmig gewundenes Blech (9c) umfasst.

4. Vorrichtung nach einem der vorherigen Ansprüche, **dadurch gekennzeichnet, dass** ein Wirbelkörper (9, 9a, 9b, 9c, 9d) durch zwei senkrecht zur Strömungsrichtung in einem Abstand zueinander angeordnete Lochbleche (9a,9b) ausgebildet ist, zwischen denen sich wenigstens ein weiteres, insbesondere gelochtes, Blech (9c) erstreckt.

5. Vorrichtung nach einem der vorherigen Ansprüche, **dadurch gekennzeichnet, dass** ein Wirbelkörper (9, 9a, 9b, 9c, 9d) wenigstens ein Lochblech umfasst, welches eine Vielzahl von Löchern mit unterschiedlichen Querschnittsformen und/oder Querschnittsgrößen aufweist.

6. Vorrichtung nach einem der vorherigen Ansprüche, **dadurch gekennzeichnet, dass** die jeweils in den Blechen angeordneten Löcher in Strömungsrichtung betrachtet zueinander versetzt angeordnet sind, so dass es in Strömungsrichtung für das fließende Wasser keinen ungestörten Weg durch die Löcher der hintereinander angeordneten Lochbleche gibt.

7. Vorrichtung nach einem der vorherigen Ansprüche, **dadurch gekennzeichnet, dass** ein Wirbelkörper (9, 9a, 9b, 9c, 9d) gegen einen direkten elektrischen Kontakt durch ein isolierendes Element (10) von einer Opferanode (4) getrennt ist.

8. Vorrichtung nach einem der vorherigen Ansprüche, **dadurch gekennzeichnet, dass** wenigstens ein Wirbelkörper (9, 9a, 9b, 9c, 9d) vor und wenigstens ein Wirbelkörper (9, 9a, 9b, 9c, 9d) hinter wenigstens einer Opferanode (4) angeordnet ist.

9. Vorrichtung nach Anspruch 8, **dadurch gekennzeichnet, dass** die Wirbelkörper (9, 9a, 9b, 9c, 9d) vor und hinter einer Opferanode (4) identisch sind und in ihrer Orientierung zur Strömungsrichtung um 90 Grad verdreht sind.

10. Vorrichtung nach einem der vorherigen Ansprüche, **dadurch gekennzeichnet, dass** zwischen einem Wirbelkörper (9, 9a, 9b, 9c, 9d) und einer Opferanode (4) ein Abstand vorgesehen ist, insbesondere vermittels eines Abstandshalters (14) zwischen diesen Elementen.

11. Vorrichtung nach einem der vorherigen Ansprüche, **dadurch gekennzeichnet, dass** ein Wirbelkörper (9, 9a, 9b, 9c, 9d) mittels eines Sicherungselementes (13) in seiner Position örtlich fixiert ist.

## Claims

1. Water treatment device comprising a metal casing (1) in which at least one metallic, sacrificial anode (4), which is electrically and conductively connected to the casing (1), is disposed, whereby a metallic swirl member (9, 9a, 9b, 9c, 9d), which causes turbulence in the flow of water, is disposed in the casing, before the sacrificial anode as seen in the direction of flow, **characterized in that** a swirl member (9, 9a, 9b, 9c, 9d) comprises a number of holed, metal plates that are variously orientated in relation to each other.

2. Device in accordance with claim 1, **characterized in that** the holed metal plates of a swirl member (9, 9a, 9b, 9c, 9d) are connected to each other, especially by a plug-in connection (9d).

3. Device in accordance with one of the preceding claims, **characterized in that** a swirl member (9, 9a, 9b, 9c, 9d) comprises a holed, metal plate (9c) that winds helically in the direction of flow.

4. Device in accordance with one of the preceding claims, **characterized in that** a swirl member (9, 9a, 9b, 9c, 9d) is formed by two holed, metal plates (9a, 9b), between which at least one further, especially holed, metal plate (9c) extends, and disposed, vertically in relation to the direction of flow, at a separation from each other.

5. Device in accordance with one of the preceding claims, **characterized in that** a swirl member (9, 9a, 9b, 9c, 9d) includes at least one holed, metal plate that has a number of holes in it of different, cross-sectional form and/or size.

6. Device in accordance with one of the preceding claims, **characterized in that** the holes in the metal plates are arranged displaced in relation to each other, as seen in the direction of flow, such that there is no uninterrupted path, for water flow in the direction of flow, through the holes in the holed plates disposed one after another.

7. Device in accordance with one of the preceding claims, **characterized in that** a swirl member (9, 9a, 9b, 9c, 9d) is insulated from a sacrificial anode, against direct electrical contact, by an insulating element (10).

8. Device in accordance with one of the preceding claims, **characterized in that** at least one swirl member (9, 9a, 9b, 9c, 9d) is disposed in front of and behind a sacrificial anode (4).

9. Device in accordance with claim 8, **characterized in that** the swirl members (9, 9a, 9b, 9c, 9d) disposed in front of and behind a sacrificial anode (4) are identical and are rotated through 90° in relation to the direction of flow.

10. Device in accordance with one of the preceding claims, **characterized in that** there is a gap between a swirl member (9, 9a, 9b, 9c, 9d) and a sacrificial anode (4), especially one produced by a spacer (14) placed between these components.

11. Device in accordance with one of the preceding claims, **characterized in that** a swirl member (9, 9a, 9b, 9c, 9d) is fixed in its position by a securing means (13).

## Revendications

1. Dispositif de traitement de l'eau comportant une douille (1) métallique, dans laquelle au moins une anode sacrificielle (4) métallique est disposée, laquelle est reliée de manière conductrice à la douille (1), au moins un corps à tourbillon (9, 9a, 9b, 9c, 9d) métallique, causant dans l'écoulement d'eau des tourbillonnements étant disposé dans la douille (1) dans le sens d'écoulement avant une anode sacrificielle (4), **caractérisé en ce qu'**un corps à tourbillon (9, 9a, 9b, 9c, 9d) comporte une pluralité de tôles perforées orientées différemment les unes par rapport aux autres.

2. Dispositif selon la revendication 1, **caractérisé en ce que** les tôles perforées d'un corps à tourbillon (9, 9a, 9b, 9c, 9d) sont fixées les unes aux autres en particulier par un assemblage à emboîtement (9d).

3. Dispositif selon l'une quelconque des revendications précédentes, **caractérisé en ce qu'**un corps à tourbillon (9, 9a, 9b, 9c, 9d) comporte une tôle (9c) perforée, enroulée en spirale dans le sens d'écoulement.

4. Dispositif selon l'une quelconque des revendications précédentes, **caractérisé en ce qu'**un corps à tourbillon (9, 9a, 9b, 9c, 9d) est réalisé par deux tôles perforées (9a, 9b) disposées perpendiculairement au sens d'écoulement à une distance l'une de l'autre, entre lesquelles au moins une autre tôle (9c), en particulier perforée s'étend.

5. Dispositif selon l'une quelconque des revendications précédentes, **caractérisé en ce qu'**un corps à tourbillon (9, 9a, 9b, 9c, 9d) comporte au moins une tôle perforée qui présente une pluralité de trous avec différentes formes de section et/ou tailles de section.

6. Dispositif selon l'une quelconque des revendications précédentes, **caractérisé en ce que** les trous disposés respectivement dans les tôles sont disposés en déport l'un par rapport à l'autre, considérés dans le sens d'écoulement de sorte qu'aucune course ne soit perturbée dans le sens d'écoulement pour l'eau d'écoulement par les trous des tôles perforées disposées l'une derrière l'autre.

7. Dispositif selon l'une quelconque des revendications précédentes, **caractérisé en ce qu'**un corps à tourbillon (9, 9a, 9b, 9c, 9d) est séparé d'une anode sacrificielle (4) pour éviter un contact électrique direct par un élément (10) isolant.

8. Dispositif selon l'une quelconque des revendications précédentes, **caractérisé en ce qu'**au moins un corps à tourbillon (9, 9a, 9b, 9c, 9d) est disposé devant et au moins un corps à tourbillon (9, 9a, 9b, 9c, 9d) est disposé derrière au moins une anode sacrificielle (4).

9. Dispositif selon la revendication 8, **caractérisé en ce que** les corps à tourbillon (9, 9a, 9b, 9c, 9d) sont identiques devant et derrière une anode sacrificielle (4) et sont pivotés dans leur orientation par rapport au sens d'écoulement de 90 degrés.

10. Dispositif selon l'une quelconque des revendications précédentes, **caractérisé en ce qu'**une distance est prévue entre un corps à tourbillon (9, 9a, 9b, 9c, 9d) et une anode sacrificielle (4), en particulier au moyen d'un élément d'écartement (14) entre ces éléments.

11. Dispositif selon l'une quelconque des revendications précédentes, **caractérisé en ce qu'**un corps à tourbillon (9, 9a, 9b, 9c, 9d) est fixé localement au moyen d'un élément de blocage (13) dans sa position.
